# EUROPÄISCHE PATENTSCHRIFT

(11) **EP 3 254 902 B1**
(45) Veröffentlichungstag und Bekanntmachung des Hinweises auf die Patenterteilung: **17.03.2021**
(21) Anmeldenummer: 17173047.6
(22) Anmeldetag: 26.05.2017
(51) Int. Cl.: B60R 11/00, B60R 11/04, B60R 1/00

(54) **ÜBERWACHUNGSVORRICHTUNG FÜR DAS UMFELD EINES FAHRZEUGS, VERFAHREN ZUM BETREIBEN HIERVON, SOWIE FAHRZEUG HIERMIT**
MONITORING DEVICE FOR THE AREA AROUND A VEHICLE, METHOD FOR OPERATING THEREOF, AND VEHICLE USING THE SAME
DISPOSITIF DE SURVEILLANCE DE L'ENVIRONNEMENT D'UN VÉHICULE AUTOMOBILE, SON PROCÉDÉ DE FONCTIONNEMENT ET VÉHICULE AUTOMOBILE EN ÉTANT ÉQUIPÉ

(30) Priorität: 06.06.2016 DE 102016209927
(43) Veröffentlichungstag der Anmeldung: 13.12.2017
(73) Patentinhaber: MEKRA LANG GmbH & Co. KG, 91465 Ergersheim (DE)
(72) Erfinder: Dr. Lang, Werner, 91465 Ergersheim (DE); Enz, Andreas, 91593 Burgbernheim (DE)
(74) Vertreter: Winter, Brandl, Fürniss, Hübner, Röss, Kaiser, Polte - Partnerschaft mbB

(56) Entgegenhaltungen:
- EP-A1- 2 810 825
- EP-A1- 2 955 065
- WO-A2-2005/039926
- KR-B1- 101 148 994
- US-A1- 2004 127 298
- US-A1- 2010 288 896
- US-A1- 2015 175 088

## Beschreibung

Die vorliegende Erfindung betrifft eine Überwachungsvorrichtung für das Umfeld eines Fahrzeugs, insbesondere für ein Spiegelersatzsystem. Weiterhin betrifft die vorliegende Erfindung ein Verfahren zum Betreiben bzw. Ansteuern einer derartigen Überwachungsvorrichtung, sowie ein mit einer derartigen Überwachungsvorrichtung ausgestattetes Fahrzeug.

Bei Kraftfahrzeugen, ungeachtet ob sie zur Personenbeförderung, zur Güterbeförderung oder zu anderen Zwecken eingesetzt werden, sind sogenannte Sichtfelder gesetzlich vorgeschrieben, welche durch fahrzeugseitige Überwachungsvorrichtungen, Einrichtungen für indirekte Sicht etc. sichergestellt werden müssen (vergl. z.B. ECE R46).

Einrichtungen für indirekte Sicht können in allgemein bekannter Weise durch entsprechende Spiegel (z.B. sog. "Rückspiegel") gebildet werden. Fahrzeugseitige Überwachungsvorrichtungen umfassen z.B. (bildgebende) Sensoren oder Sensoreinheiten, Kameras, Emitter/Sensor-Paarungen oder dgl.

Fahrzeugseitige Überwachungsvorrichtungen dienen oftmals dazu, die notwendigen Einrichtungen für indirekte Sicht zu ergänzen. Die Sensoren, Kameras, Bildaufnahmevorrichtungen (zum Beispiel CCD-Sensoren der dergleichen) befinden sich außen am Fahrzeug und übertragen z.B. aufgenommene Bildsignale in das Fahrzeuginnere, wo diese Signale nach einer entsprechenden Aufarbeitung auf einer Anzeigeeinrichtung für den Fahrer dargestellt werden.

Die Sensoreinheiten solcher Überwachungsvorrichtungen können starr oder beweglich an dem jeweiligen Fahrzeug angebracht sein. Ein Beispiel für starr angebrachte oder eingebaute Kameras oder Bildaufnahmevorrichtungen sind sogenannte Rückfahrkameras, welche beim Rückwärtsfahren aktiviert werden und dem Fahrer ein Bild eines Bereichs hinter dem Fahrzeug übermitteln. Ein Beispiel für eine bewegliche Anbringung einer Sensoreinheit ist in der DE 10 2012 015 395 B3 angegeben. Hieraus ist eine als Kameraarm bezeichnete Vorrichtung zum beweglichen Lagern einer Kamera oder Bildaufnahmevorrichtung gegenüber einer Fahrzeugkarosserie bekannt. Der Kameraarm, der gegebenenfalls einteilig sein kann, ist hier im Wesentlichen zweiteilig ausgeführt und besteht aus einem ersten Tragelement, welches lagefest mit der Fahrzeugkarosserie verbunden ist und einem zweiten Tragelement zur Aufnahme der Kamera oder Bildaufnahmevorrichtung. Die beiden Tragelemente sind über einen Schwenkmechanismus schwenkbeweglich miteinander verbunden. Durch die Anordnung der Kamera oder Bildaufnahmevorrichtung am freien Ende des Kameraarms bzw. des zweiten Tragelements ist es möglich, eine optimale Sicht auf den zu erfassenden Bereich zu erzielen. Durch die schwenkbare Verbindung von erstem Tragelement und zweitem Tragelement kann ersteres gegenüber dem letzteren eine Schwenk- und damit Ausweichbewegung durchführen, damit im Falle einer Kollision des zweiten Tragelements mit einem feststehenden Hindernis das zweite Tragelement um den Schwenkmechanismus eine Ausweichbewegung durchführen kann.

Als nachteilig bei dem Kameraarm gemäß der DE 10 2012 015 395 B3 wird erachtet, dass die Möglichkeiten zur Ausrichtung und damit Einstellung von Blickrichtung bzw. (räumlichem) Erfassungsbereich nach wie vor unzulänglich sind.

Ziel der Druckschriften EP 2 955 065 A1, WO 2005/039926 A2, US 2015/175088 A1, KR 101 148 994 B1, EP 2 810 825 A1, US 2010/288 896 A1 und US 2004/127298 A1 ist es, den räumlichen Erfassungsbereich einer Sensoreinheit situationsbedingt zu verändern Die Druckschrift EP 2 955 065 A1 offenbart eine Überwachungsvorrichtung mit den Merkmalen des Oberbegriffs des Anspruchs 1.

Der Gegenstand der vorliegenden Erfindung setzt hier an und Aufgabe der vorliegenden Erfindung ist es, eine Überwachungsvorrichtung für ein Fahrzeug zu schaffen, bei dem unter Beibehaltung der Vorteile aus der DE 10 2012 015 395 B3 eine noch größere Flexibilität im Sinne von Einstellmöglichkeiten bei im Wesentlichen unveränderter Aufrechterhaltung des räumlichen Erfassungsbereichs der Sensoreinheit gegeben ist.

Zur Lösung dieser Aufgabe weist gemäß eines ersten Aspekts der vorliegenden Erfindung die erfindungsgemäße Überwachungsvorrichtung die in Anspruch 1 genannten Merkmale auf. Vorteilhafte Weiterbildungen sind Gegenstand der Unteransprüche.

Durch das Merkmal des dritten Tragelements und des zweiten Schwenkmechanismus kann man dem in dem dritten Tragelement angeordnete Sensoreinheit, also beispielsweise einer Kamera, einem Bildsensor oder dergleichen unter Beibehaltung der bisherigen Vorteile (ausreichender Abstand zur Fahrzeugkarosserie für hinreichend großes Sichtfeld und Ausweichmöglichkeit im Falle einer Kollision) eine weitaus größere Anzahl von Verstellmöglichkeiten zur Verfügung stellen. Durch das Merkmal der kompensierenden Schwenkbewegung des dritten Tragelements um den zweiten Schwenkmechanismus herum wird der räumliche Erfassungsbereich der Sensoreinheit unverändert beibehalten.

In einer vorteilhaften Ausgestaltungsform umfasst die Sensoreinheit (wenigstens) eine Bildaufnahmeeinheit. Bildaufnahmeeinheiten sind als Erfassungsmittel von Strahlung beliebiger Wellenlänge(n) zu verstehen. Hierbei können reine Sensoren oder Paarungen aus Emitter(n) festgelegter Wellenlänge(n) und Sensor(en) für diese Wellenlänge(n) verwendet werden.

Das dritte Tragelement kann bevorzugt bezüglich des zweiten Tragelements über den zweiten Schwenkmechanismus (ebenfalls) in wenigstens einer bestimmten Winkelposition feststellbar sein, wobei besonders bevorzugt die vorbestimmten Winkelpositionen zwischen dem ersten und zweiten Tragelement und zwischen dem zweiten und dritten Tragelement mindestens eine Betriebsposition umfassen. Als Betriebsposition sei hierbei eine z.B. werks- oder benutzerseitig definierte bzw. definierbare Winkelposition zwischen den entsprechenden Tragelementen zu verstehen, die auf einen bestimmten Betriebszustand oder Einsatz des mit der Überwachungsvorrichtung ausgestatteten Fahrzeugs abgestimmt oder hierfür optimiert ist.

Zweites und/oder drittes Tragelement sind bevorzugt als ein armförmiges Bauteil ausgebildet. Hierdurch wird insbesondere sichergestellt, dass die Sensor- bzw. Bildaufnahmeeinheit (Kamera, CCD-Sensor, etc.) im dritten Tragelement in einem ausreichenden Abstand von der Fahrzeugkarosserie angeordnet werden kann und somit den erforderlichen Sichtbereich abdecken kann. Darüber hinaus erlaubt eine armförmige Ausgestaltung von zweitem und/oder drittem Tragelement eine optimale Verstellbewegung der jeweiligen Tragelemente zueinander unter Verstellung von erstem und/oder zweitem Schwenkmechanismus.

Der räumliche Erfassungsbereich der Sensor- bzw. Bildaufnahmeeinheit kann entgegen der Fahrtrichtung des Fahrzeugs oder nach unten auf die Fahrbahn ausgerichtet. In beiden Fällen ermöglicht die Überwachungsvorrichtung unter Beibehaltung der bisherigen Vorteile (ausreichender Abstand zur Fahrzeugkarosserie für hinreichend großen Erfassungsbereich und Ausweichmöglichkeit im Falle einer Kollision) eine weitaus größere Anzahl von Verstellmöglichkeiten.

Ist das zweite Tragelement relativ zum ersten Tragelement beim Einwirken einer größeren Kraft als der normalerweise im Betrieb auftretenden Kraft weg- oder einklappbar, ist eine sogenannte Notabklapp-Funktion gegeben, welche Schäden beim Auftreffen auf ein Hindernis minimieren kann.

Ist das dritte Tragelement bezüglich des zweiten Tragelements mittels des zweiten Schwenkmechanismus in einer bestimmten Winkelposition feststellbar, kann insbesondere dann, wenn das zweite Tragelement relativ zum ersten Tragelement beim Einwirken einer größeren Kraft als der normalerweise im Betrieb auftretenden Kraft weg-oder einklappbar ist, nach einem derartigen Weg- oder Einklappvorgang, gefolgt von einem Zurückklappen in die Ausgangsstellung, sichergestellt sein, dass das dritte Tragelement und damit die Sensoreinheit wieder in der ursprünglichen Position bzw. Erfassungsbereichausrichtung zu liegen kommt.

Die Feststellung des dritten Tragelements gegenüber dem zweiten Tragelement im Bereich des zweiten Schwenkmechanismus kann so sein, dass auch das dritte Tragelement relativ zum zweiten Tragelement beim Einwirken einer größeren Kraft als der normalerweise im Betrieb auftretenden Kraft weg- oder einklappbar ist. Schäden insbesondere an der Sensoreinheit aufgrund von beispielsweise Kollisionen mit feststehenden Hindernissen lassen sich somit noch besser vermeiden.

Während oder nach dem Abklappvorgang über den ersten Schwenkmechanismus (zwischen dem ersten und zweiten Tragelement) kann dafür gesorgt werden, dass der räumliche Erfassungsbereich der Sensoreinheit im Wesentlichen unverändert bleibt. Dies bedingt eine entsprechende Verstellbewegung des dritten Tragelements relativ zum zweiten Tragelement über den zweiten Schwenkmechanismus, wobei diese Verstellung beispielsweise über eine mechanische oder elektromotorische Steuereinrichtung zur Betätigung des ersten und/oder zweiten Schwenkmechanismus erfolgen kann. Insbesondere zur Erzielung der vordefinierten Blickrichtung und damit des Erfassungsbereichs der Sensoreinheit kann hierbei die Steuerung des zweiten Schwenkmechanismus (zwischen dem zweiten und dritten Tragelement) in Abhängigkeit von dem Winkel zwischen dem ersten und zweiten Tragelement (im Bereich des ersten Schwenkmechanismus) erfolgen.

Die Steuerung der beiden Schwenkmechanismen oder wenigstens eines Schwenkmechanismus kann darüber hinaus in Abhängigkeit von einem Winkel zwischen den jeweiligen Tragelementen und/oder von Fahrzuständen des Fahrzeugs erfolgen, also beispielsweise abhängig von Geschwindigkeit, Fahrtrichtung, Kurvenfahrt, Lenkradeinschlaggeschwindigkeit, Lenkwinkel nach Größe und Richtung, Anhängerwinkel zum Fahrzeug nach Größe und Richtung, Knickwinkel zwischen Zugmaschine und Auflieger nach Größe und Richtung, Aufliegerbreite und/oder -länge, seitlicher Überstand von Ladegut, Betätigung von Fahrtrichtungsanzeigen.

Die (An)Steuerung wenigstens eines der beiden Schwenkmechanismen kann einerseits derart erfolgen, dass ein Abstand zwischen der Sensoreinheit und einer Längsmittelebene des Fahrzeugs unabhängig von einer sich ändernden Anbaudistanz (einem Abstand) zwischen der Längsmittelebene und dem ersten Schwenkmechanismus im Wesentlichen konstant ist.

Andererseits kann die (An)Steuerung wenigstens eines der beiden Schwenkmechanismen auch derart erfolgen, dass ein Abstand zwischen der Sensoreinheit und der Längsmittelebene des Fahrzeugs bei im Wesentlichen unveränderter Anbaudistanz (dem Abstand) zwischen der Längsmittelebene und dem ersten Schwenkmechanismus abhängig von einer (variablen) Aufbaudistanz (einem Abstand) zwischen der Längsmittelebene und einem Fahrzeugaufbau veränderbar ist.

Die beiden Schwenkmechanismen können durch im Fahrzeuginnenraum angeordnete Steuerelemente steuerbar sein, sodass die Lage und/oder Ausrichtung der Bildaufnahmeeinheit beispielsweise vom Fahrer des Fahrzeugs nach Wunsch oder Bedarf einstellbar ist.

Wenigstens einer der beiden Schwenkmechanismen kann ein Rast- oder Friktionslager umfassen, wobei das oder die Rast- oder Friktionslager entweder für sich alleine gestellt sind oder in Kombination mit einem mechanischen und/oder motorischen Stellantrieb zusammenwirken.

Gemäß einem weiteren Aspekt der vorliegenden Erfindung wird ein Verfahren zum Ansteuern einer Überwachungsvorrichtung für das Umfeld eines Fahrzeugs, insbesondere für ein Spiegelersatzsystem, geschaffen, bei dem das dritte Tragelement bei einem Schwenkvorgang zwischen erstem und zweitem Tragelement im Verlauf seines Schwenkvorgangs um den zweiten Schwenkmechanismus so angesteuert wird, dass der Schwenkvorgang zwischen erstem und zweitem Tragelement kompensiert wird.

Erfindungsgemäß erfolgt hierbei die Ansteuerung des dritten Tragelements bei einem Schwenkvorgang zwischen erstem und zweitem Tragelement so, dass der räumliche Erfassungsbereich der Sensoreinheit im Wesentlichen unverändert bleibt.

Gegenstand der vorliegenden Erfindung ist schließlich ein Fahrzeug, insbesondere ein Nutzfahrzeug, welches mit wenigstens einer erfindungsgemäßen Überwachungsvorrichtung ausgestattet ist, welche gemäß dem erfindungsgemäßen Verfahren betreibbar sein kann.

Weitere Einzelheiten, Aspekte und Vorteile der vorliegenden Erfindung ergeben sich besser aus der nachfolgenden Beschreibung von Ausführungsbeispielen anhand der Zeichnung.

Es zeigt:
Fig. 1 schematisch stark vereinfacht in Draufsicht eine erfindungsgemäße Überwachungsvorrichtung, angeordnet an einem Fahrzeugkarosserieteil;
Fig. 2 schematisch vereinfacht eine Seitenansicht auf eine erfindungsgemäße Überwachungsvorrichtung an einem Fahrzeugkarosserieteil;
Fig. 3 eine Fig. 1 entsprechende Darstellung einer Abklapp- oder Verschwenkbewegung der Überwachungsvorrichtung unter Beibehaltung einer vordefinierten Blickrichtung der optischen Achse einer Bildaufnahmeeinheit, d.h. allgemein gesagt des (räumlichen) Erfassungsbereichs einer Sensoreinheit;
Fig. 4 eine Fig. 1 entsprechende Darstellung, wie durch eine Verschwenkung um den zweiten Schwenkmechanismus die Blickrichtung der optischen Achse änderbar ist;
Fig. 5 eine Fig. 1 entsprechende Darstellung zur Veranschaulichung einer Weg-oder Einklappbewegung im Fall der Kollision mit einem Hindernis;
Fig. 6 eine Fig. 5 entsprechende Darstellung, wobei nach der Not- oder Zwangsabklappung aufgrund beispielsweise einer Kollision die Erfassung im räumlichen Erfassungsbereich durch die Sensoreinheit beibehalten werden kann;
Fig. 7 eine schematische Draufsicht auf ein Fahrzeug mit den Stellungen der Überwachungsvorrichtung von Fig. 6, jedoch mit weggelassenem Hindernis;
Fig. 8 eine Fig. 1 entsprechende Darstellung, wie mit der erfindungsgemäßen Überwachungsvorrichtung bei unterschiedlichen Ausladungen des Fahrzeugs ein ausreichender Erfassungsbereich beibehalten werden kann;
Fig. 9 in Draufsicht schematisch ein Nutzfahrzeug mit Sattelauflieger in Kombination mit zwei erfindungsgemäßen Überwachungsvorrichtungen;
Fig. 10 in Draufsicht schematisch die Beibehaltung eines Abstands zwischen Bildaufnahme- oder Sensoreinheit und Längsmittelebene des Fahrzeugs bei sich änderndem Abstand zwischen erstem Schenkmechanismus und der Längsmittelebene; und
Fig. 11 in Draufsicht schematisch die Änderung eines Abstands zwischen Bildaufnahme- oder Sensoreinheit und Längsmittelebene des Fahrzeugs bei unverändertem Abstand zwischen erstem Schenkmechanismus und der Längsmittelebene und einer sich ändernden Breite eines Fahrzeugaufbaus, d.h. bei einer sich ändernden Aufbaudistanz.

In den einzelnen Figuren der Zeichnung, welche als rein schematisch/erläuternd zu verstehen sind und welche zueinander nicht maßstäblich sind, bezeichnen gleiche Bezugszeichen oder Symbole gleiche oder einander entsprechende Elemente oder Abschnitte, sodass auf wiederholte Beschreibungen in den jeweiligen Figuren der Zeichnung verzichtet wird.

Eine in der Zeichnung insgesamt mit 2 bezeichnete Überwachungsvorrichtung umfasst im Wesentlichen eine Sensoreinheit 4, welche in den dargestellten Ausführungsbeispielen eine Bildaufnahmeeinheit sein möge und welche mittels eines Ausleger- oder Tragsystems 6 bezüglich einer Fahrzeugkarosserie 8 gelagert ist. Das Tragsystem umfasst eine Mehrzahl von Tragelementen, nämlich ein erstes Tragelement 10, welches lagefest an dem Fahrzeug bzw. der Karosserie 8 befestigt ist, ein zweites Tragelement 12, welches über einen ersten Schwenkmechanismus A schwenkbeweglich verstellbar an dem ersten Tragelement 10 angebracht ist und ein drittes Tragelement 14, welches über einen zweiten Schwenkmechanismus B schwenkbeweglich verstellbar an dem zweiten Tragelement 12 angeordnet ist, wobei sich die beiden Schwenkmechanismen A und B jeweils im Bereich der beiden Enden des zweiten Tragelements 12 befinden. Zumindest das zweite Tragelement 12 und das dritte Tragelement 14 sind jeweils als ein langgestreckt/armförmiges Bauteil ausgebildet. Hierbei trägt das dritte Tragelement 14 an seinem dem zweiten Schwenkmechanismus B abgewandten (distalen) Endabschnitt die Bildaufnahmeeinheit 4, welche beispielsweise als Kamera, Objektivteil einer Kamera, CCD-Sensor, IR-Sensor oder dergleichen ausgebildet sein kann. Auch sind Kombinationen aus beispielsweise IR-Emitter und IR-Sensor oder ähnliche bildgebende Einrichtungen, Radar- oder Ultraschallsensoren oder dergl. unter dem Begriff "Bildaufnahmeeinheit" zu verstehen.

Die Bildaufnahmeeinheit 4 hat eine optische Achse 16 und einen in der Regel beidseits der optischen Achse 16 liegenden räumlichen Erfassungsbereich 18. Bei einer seitlichen Anordnung der Überwachungsvorrichtung 2 an der Karosserie 8 (nach Art eines Außenspiegels) ist die optische Achse 16 bzw. der Erfassungsbereich 18 der Bildaufnahmeeinheit 4 entgegen der Fahrtrichtung oder Vorwärtsrichtung V des Fahrzeugs nach hinten gerichtet, sodass ein von der Bildaufnahmeeinheit 4 aufgenommenes oder erzeugtes Bild in einem Bereich hinterhalb/seitlich des Fahrzeugs erhalten werden kann.

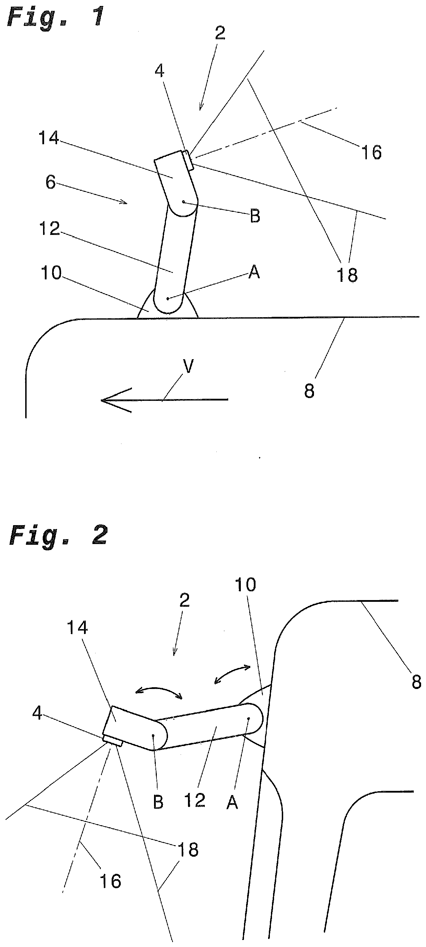

Figur 2 zeigt die Möglichkeit, die Überwachungsvorrichtung 2 so an der Karosserie 8 anzubringen, dass die optische Achse 16 und damit die Blickrichtung (der Erfassungsbereich) der Bildaufnahmeeinheit 4 nach unten in Richtung Fahrbahnoberfläche gerichtet ist. Eine derartige Anbringung der Überwachungsvorrichtung 2 erfolgt insbesondere bei Nutzfahrzeugen, beispielsweise Lastkraftwagen, Omnibussen oder dergleichen, wobei der Erfassungsbereich 18 der Bildaufnahmeeinheit 4 dann beispielsweise einen Bereich vorderhalb der Karosserie 8 und/oder seitlich der Karosserie 8 abdeckt oder erfasst.

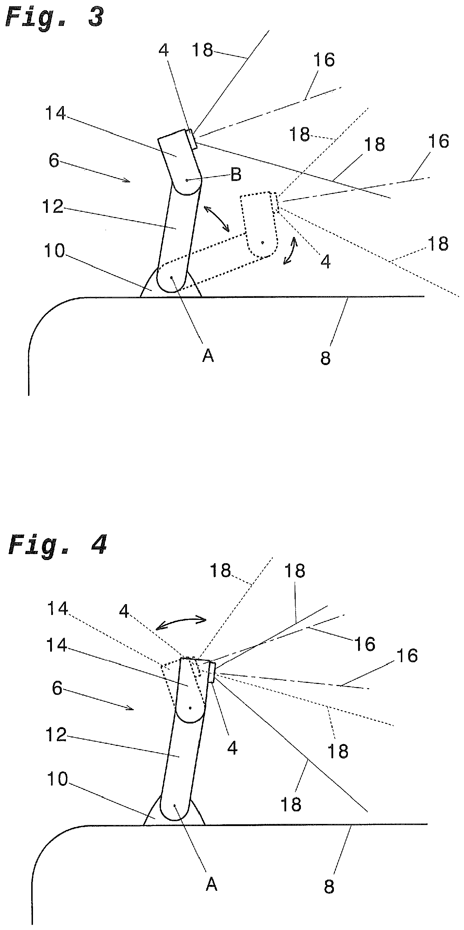

Die Figuren 3 und 4 zeigen unterschiedliche Verstellmodi, welche mit der erfindungsgemäßen Überwachungsvorrichtung 2 möglich sind.

In dem Ausführungsbeispiel von Figur 3 erfolgt eine Verstellung oder Verschwenkung sowohl des zweiten Tragelements 12 relativ zum ersten Tragelement 10 als auch des dritten Tragelements 14 relativ zum zweiten Tragelement 12. Diese Verstellung erfolgt jeweils durch entsprechende Schwenkbewegungen um den ersten Schwenkmechanismus A bzw. zweiten Schwenkmechanismus B. Man erkennt aus der Darstellung von Fig. 3, dass bei der dortigen Verstellbewegung die Richtung der optischen Achse 16 und damit der Erfassungsbereich18 im Wesentlichen konstant bleibt, jedoch der Abstand der Bildaufnahmeeinheit 4 von der Karosserie 8 veränderbar ist. Die weitestgehende oder vollständige Beibehaltung der Richtung der optischen Achse 16 erfolgt durch eine Verschwenkung sowohl im Schwenkmechanismus A als auch im Schwenkmechanismus B. Eine in Fig. 3 noch weiter gerichtete Schwenkbewegung des dritten Tragelements 14 gegenüber dem zweiten Tragelement 12 um die Achse des zweiten Schwenkmechanismus B entgegen Uhrzeigersinn würde dazu führen, dass die optischen Achsen 16 parallel zueinander verlaufen, falls dies gewünscht oder notwendig ist. Die Verstellung gemäß Fig. 3 kann beispielsweise geschwindigkeitsabhängig erfolgen. Bei geringer Fahrtgeschwindigkeit des Fahrzeugs kann die mit durchgezogenen Linien dargestellte Lage gewählt werden. Bei zunehmender Geschwindigkeit wird das zweite Tragelement 12 näher an die Karosserie 8 herangeschwenkt, um die Ausladung und damit den Luftwiderstand und Vibrationen zu verringern. Die kompensierende Verschwenkung des dritten Tragelements 14 um die Achse des Schwenkmechanismus B erhält hierbei den Erfassungsbereich 18 im Wesentlichen oder vollständig aufrecht, d.h. unverändert.

Im Beispiel von Fig. 4 bleibt die Lage des zweiten Tragelements 12 relativ zum ersten Tragelement 10 starr, d. h. unverändert und es erfolgt nur eine Verschwenkung des dritten Tragelements 14 gegenüber dem zweiten Tragelement 12 im Bereich des zweiten Schwenkmechanismus B. Der Abstand der Bildaufnahmeeinheit 4 zur Karosserie 8 bleibt somit im Wesentlichen unverändert und nur die Richtung der optischen Achse 16, d.h. die Ausrichtung (nicht die Größe) des Erfassungsbereichs 18 ändert sich entsprechend der Schwenkbewegung im zweiten Schwenkmechanismus B.

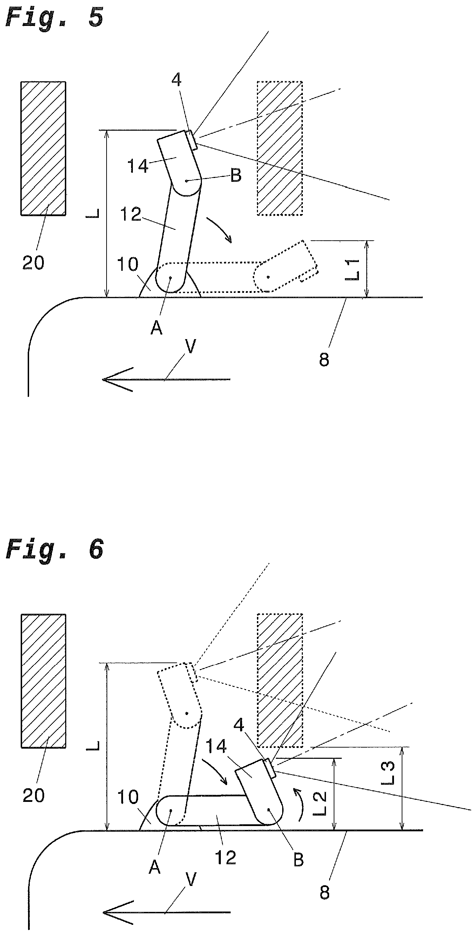

Der erste Schwenkmechanismus A und/oder der zweite Schwenkmechanismus B ermöglicht/ermöglichen einerseits eine stabile Beibehaltung der jeweils gewählten Relativlagen zwischen erstem und zweitem Tragelement 10 und 12 bzw. zweitem und drittem Tragelement 12 und 14 im normalen Betrieb. D. h., die Positionierung und Ausrichtung der Bildaufnahmeeinheit 4 ist im normalen Betrieb stabil und vibrationsfrei, sodass das von der Bildaufnahmeeinheit 4 erzeugte oder übermittelte Bild aus dem Erfassungsbereich 18 ebenfalls entsprechend stabil und damit aussagefähig ist. Hierzu sind bevorzugt beide Schwenkmechanismen A und B in Form eines Rast- oder Friktionslagers ausgelegt. Derartige Rast- oder Friktionslager vermögen einerseits eine eingestellte Lage stabil zu halten, sind jedoch andererseits in der Lage, bei auftretenden äußeren Kräften, welche größer als normalerweise im Betrieb auftretende Kräfte sind, Ausweichbewegungen zuzulassen. Die Figuren 5 und 6 zeigen derartige Ausweichbewegungen oder Zwangs- bzw. Notabklappungen, wobei im Beispiel von Fig. 5 die Überwachungsvorrichtung 2 mit einem feststehendem Hindernis 20 kollidiert, während sich das Fahrzeug bzw. die Karosserie 8 in Richtung des Pfeils V bewegt. In Fall von Fig. 5 erfolgt die Ausweichbewegung der Überwachungsvorrichtung 2 dadurch, dass das zweite Tragelement 12 relativ zum ersten Tragelement 10 um den ersten Schwenkmechanismus A in Richtung des Pfeils und damit in Richtung der Karosserie 8 schwenkt oder klappt, wobei die Relativlage zwischen drittem Tragelement 14 und zweitem Tragelement 12 unverändert bleibt, d. h., es findet keine Schwenkbewegung im Bereich des zweiten Schwenkmechanismus B statt. Man erkennt aus der Darstellung von Fig. 5, dass bei einer derartigen Ausweichbewegung der Überwachungsvorrichtung 2 die optische Achse 16 der Bildaufnahmeeinheit 4 in Richtung der Fahrzeugkarosserie 8 verläuft, also die Überwachungsvorrichtung 2 die Fähigkeit einbüßt, ein Bild von hinterhalb/seitlich des Fahrzeugs zu vermitteln. Im Fall einer Notabklappung der Überwachungsvorrichtung 2, um bleibende Schäden bei der Kollision mit dem Hindernis 20 zu vermeiden, ist dies eine akzeptable Option.

Um trotz Notabklappung etwa gemäß Fig. 5 weiterhin eine Sicht nach hinten zu haben, kann gemäß Fig. 6 im Bereich der Schwenkmechanismen A und B eine mechanische und/oder elektromotorische Ansteuerung derart erfolgen, dass die Verschwenkung des zweiten Tragelements 12 relativ zum ersten Tragelement 10 durch eine entsprechende Verschwenkung des dritten Tragelements 14 relativ zum zweiten Tragelement 12 im Bereich des zweiten Schwenkmechanismus B insoweit kompensiert wird, als die Blickrichtung der optischen Achse 16 auch bei vollständig an die Karosserie 8 angeklapptem zweiten Tragelement 12 weitestgehend oder vollständig der Blickrichtung vor der Notabklappung entspricht und lediglich eine gewisse Einschränkung des Erfassungsbereichs 18 dadurch erfolgt, als der Abstand L2 der Bildaufnahmeeinheit 4 zur Karosserie 8 kleiner als der Abstand L vor der Abklappung des zweiten Tragelements 12 ist.

Die Situation gemäß Fig. 6 kann von einem Benutzer, d. h. einem Fahrer des Fahrzeugs auch bewusst herbeigeführt werden, d. h., wird vom Fahrer erkannt, dass aufgrund eines ein- oder beidseitig vorhandenen Hindernisses 20 die lichte Durchfahrtsweite soweit verengt wird, dass das Fahrzeug mit voll ausgeklappter Überwachungsvorrichtung 2 nicht passieren kann, kann der Zustand gemäß Fig. 6 herbeigeführt werden, indem vom Fahrer die mechanischen und/oder elektromotorischen Steuer- und Antriebseinrichtungen für den ersten Schwenkmechanismus A und den zweiten Schwenkmechanismus B betätigt werden, sodass sich das erste Tragelement 12 im Wesentlichen vollständig an die Karosserie 8 anlegt und gleichzeitig das dritte Tragelement 14 im Bereich des zweiten Schwenkmechanismus B in Fig. 6 entgegen Uhrzeigersinn (Pfeilrichtung) schwenkt, und so die Blickrichtung der optischen Achse 16 im Wesentlichen beibehalten wird. Durch den verringerten Abstand L2 ist dann das Fahrzeug in der Lage, das Hindernis 20 kollisionsfrei zu passieren, wobei der Erfassungsbereich 18 nach hinten/seitlich weitestgehend beibehalten bleibt.

Die Antriebe im Bereich der Schwenkmechanismen A und B können in diesem Fall entsprechend aufeinander abgestimmt/programmiert sein, bestimmten Steuer- oder Regelungsalgorithmen folgen, mechanisch zwangsgekoppelt sein etc., damit insbesondere im Rahmen des erfindungsgemäßen Verfahrens bei einer Schwenkbewegung des zweiten Tragelements 12 in der aus Fig. 6 ersichtlichen Weise das dritte Tragelement 14 eine entsprechende Gegen-Schwenkbewegung zur Kompensation und zur weitestgehenden oder vollständigen Beibehaltung des Erfassungsbereichs 18 durchführt.

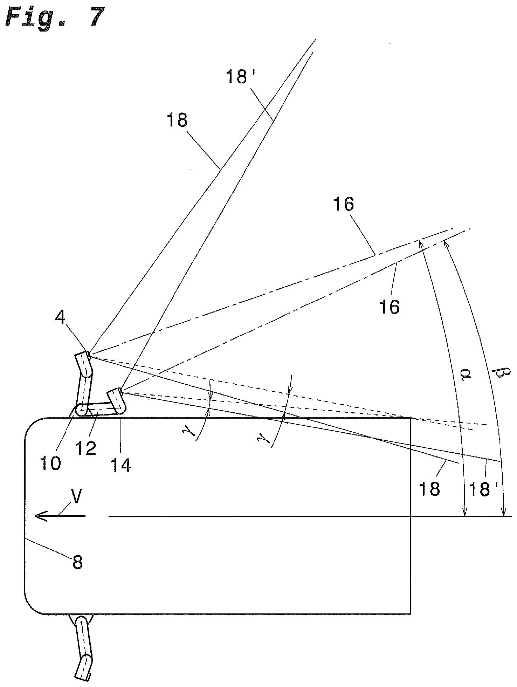

Die Draufsicht von Fig. 7 zeigt, dass auch bei an die Karosserie 8 angeklapptem zweiten Tragelement 12 aufgrund der kompensierenden Verstellbewegung des dritten Tragelements 14 die Bildaufnahmeeinheit 4 nach wie vor einen Erfassungsbereich 18' hat, der im Wesentlichen dem Erfassungsbereich 18 entspricht, den die Bildaufnahmeeinheit 4 bei von der Karosserie 8 abstehenden zweiten Tragelement 12 zur Verfügung stellen kann. Gleiches trifft auf Zwischenlagen zwischen den beiden in Fig. 7 gezeigten Endlagen der Bildaufnahmeeinheit 4 zu: der räumliche Erfassungsbereich bleibt im Wesentlichen unverändert.

Der von der Karosserie 8 verursachte Abschattungsbereich y der beiden Erfassungsbereiche 18 und 18' (die in Fig. 7 jeweils unteren Randstrahlen hiervon) ist in beiden Endlagen der Sensor- oder Bildaufnahmeeinheit 4 im Wesentlichen gleich, d.h. es ergibt sich trotz der beiden unterschiedlichen Endlagen der Sensor- oder Bildaufnahmeeinheit 4 im Wesentlichen keine Veränderung des Erfassungsbereichs 18, 18'.

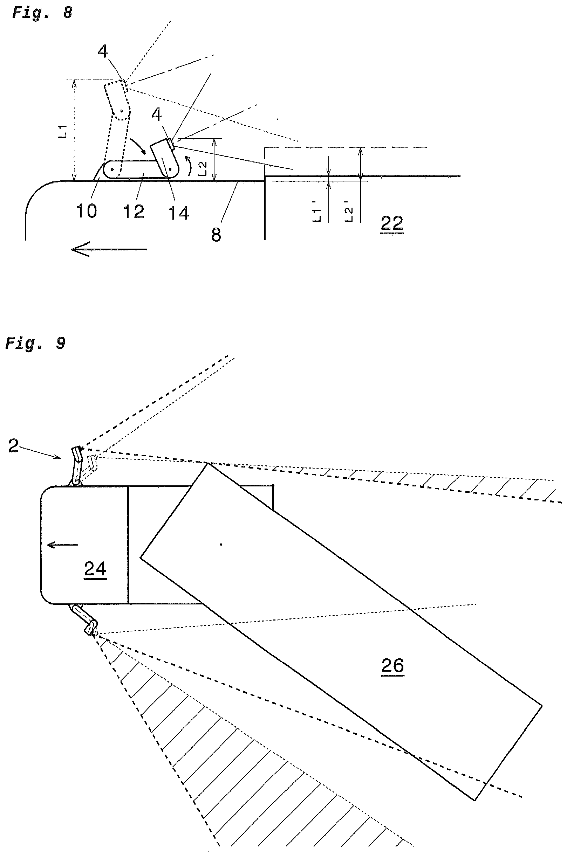

Figur 8 zeigt eine Situation entsprechend der Figuren 6 und 7, d. h., das zweite Tragelement 12 ist im Wesentlichen parallel zur Außenseite der Karosserie 8 um den ersten Schwenkmechanismus A herum angeklappt und das dritte Tragelement 14 mit der Bildaufnahmeeinheit 4 am distalen Ende hat um den zweiten Schwenkmechanismus B eine kompensierende Schwenkbewegung ausgeführt. Ein Abstand L2 zwischen der Bildaufnahmeeinheit 4 und der Außenseite der Karosserie 8 ist dementsprechend geringer als ein Abstand L1, der bei von der Karosserie 8 im Wesentlichen rechtwinklig abstehenden zweiten Tragelement 12 erreichbar ist. Hierbei kann die in Fig. 8 mit durchgezogenen Linien dargestellte Position, in welcher das zweite Tragelement 12 an die Karosserie 8 angeklappt ist, eine normale Betriebsposition sein, wenn ein fahrzeugseitiges Sichthindernis 22 in Form eines Kastenaufbaus, Anhängers, seitlich überstehender Ladung oder dergleichen nicht oder nur unwesentlich um einen Betrag L1' über die Außenkontur der Karosserie 8 hinausragt. Liegt ein größerer Überstand L2' der Ladung oder des Sichthindernisses 22 vor, kann die in Fig. 8 gestrichelt dargestellte Position der Überwachungsvorrichtung 2 gewählt werden. In beiden Fällen ist der Erfassungsbereich wieder im Wesentlichen unverändert.

Figur 9 veranschaulicht die Möglichkeit, die Stellung der Überwachungsvorrichtung 2, also die Verschwenkwege und Relativwinkellagen der einzelnen Tragelemente 10 bis 14 zueinander abhängig von Zuständen des Fahrzeugs zu machen. Im in Fig. 9 dargestellten Beispiel sei das Fahrzeug beispielsweise eine Zugmaschine 24 mit angekoppelten Auflieger 26. Bei einem in Fig. 9 dargestellten Rangiervorgang oder einer Kurvenfahrt, bei der Zugmaschine 24 und Auflieger 26 einen Winkel zueinander bilden, kann die Ansteuerung der Überwachungsvorrichtung 2, welche ein- oder beidseitig an der Zugmaschine 24 angeordnet ist, entsprechende Verstellbewegungen im Bereich der Schwenkmechanismen A und B bewirken, sodass die jeweiligen Überwachungsvorrichtungen 2 einen optimalen Erfassungsbereich, z.B. eine optimale Sicht nach hinten auch bei abgewinkeltem Auflieger 26 zur Verfügung stellen. Die Ansteuerung kann hierbei über definierte Logiken mechanischer und/oder elektronischer Art erfolgen und/oder in Abhängigkeit von Eingangsgrößen oder bestimmter Parameter ausgelöst bzw. geregelt werden. Beispiele hiervon wären die momentane Fahrsituation in Form von Geschwindigkeit, Fahrtrichtung, Lenkwinkel, Anhängerwinkel zum Fahrzeug, Knickwinkel zwischen Zugmaschine und Auflieger, Betätigung von Fahrtrichtungsanzeigen etc.. Sämtliche oder nur Teile dieser Ansteuerungslogarithmen bzw. der hierzu verwendeten Fahrzeug- und/oder Umgebungsparameter können bei der Durchführung des erfindungsgemäßen Verfahrens zur Anwendung gelangen.

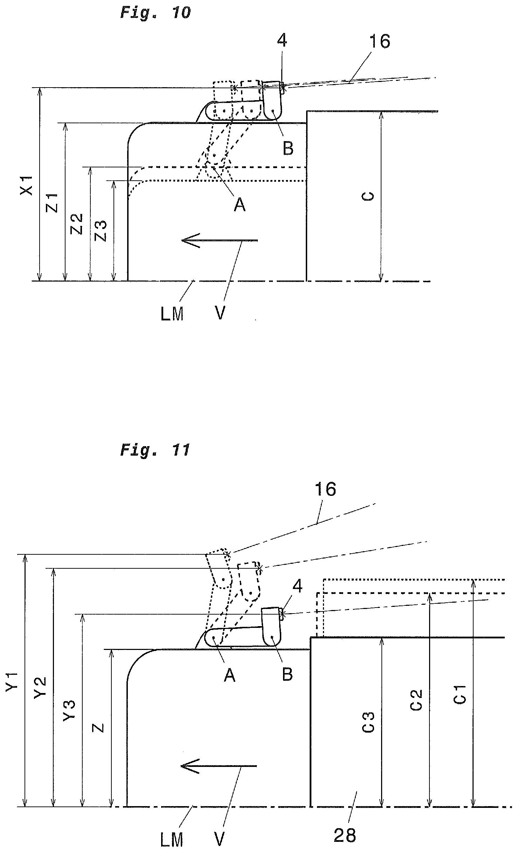

Figur 10 zeigt, dass die (An)Steuerung wenigstens eines der beiden Schwenkmechanismen A, B derart erfolgen kann, dass ein Abstand X1 zwischen der Sensoreinheit 4 und einer Längsmittelebene LM des Fahrzeugs unabhängig von einer sich ändernden Anbaudistanz (einem Abstand) Zn (n = 1, 2,....) zwischen der Längsmittelebene LM und dem ersten Schwenkmechanismus A im Wesentlichen konstant ist.

Dadurch kann bei unterschiedlichen Kabinengrößen bzw. Kabinenbreiten Zn die Distanz X1 gleich gehalten werden. Somit kann eine Variantenbildung mit nur einer Überwachungsvorrichtung 2 erfolgen und der Fahrzeughersteller kann trotz mehrerer Kabinenbreiten Zn eine einzige Systemvariante der Überwachungsvorrichtung 2 verwenden.

Figur 11 zeigt einen zu Fig. 10 umgekehrten Fall, bei dem die (An)Steuerung wenigstens eines der beiden Schwenkmechanismen A, B derart erfolgt, dass ein Abstand Yn (n = 1, 2,...) zwischen der Sensoreinheit 4 und der Längsmittelebene LM des Fahrzeugs bei im Wesentlichen unveränderter Anbaudistanz (dem Abstand) Z zwischen der Längsmittelebene LM und dem ersten Schwenkmechanismus A abhängig von einer (variablen) Aufbaudistanz (einem Abstand) Cn (n = 1, 2,...) zwischen der Längsmittelebene LM und einem Fahrzeugaufbau 28 veränderbar ist.

Hiermit kann bei unterschiedlichen Aufbaudistanzen Cn wie z.B. Aufbaubreiten, Ladungsbreiten, Anhängerbreiten, Ladungsgrößen etc. die Position der Sensoreinheit 4 zur Längsmittelebene (Abstand Yn) angepasst werden.

Eine Kombination der in den Figuren 10 und 11 dargestellten Sachverhalte, d.h. variable Anbaudistanz Zn in Kombination mit variabler Aufbaudistanz Cn ist ebenfalls problemlos beherrschbar.

Eine Beibehaltung der Ausrichtung der optischen Achse 16 bzw. des Erfassungsbereichs der Sensoreinheit 4 ist in jedem Fall gegeben bzw. realisierbar.

Man erkennt aus den Beispielen der Figuren 10 und 11 die sich ergebenden Vorteile, nämlich insbesondere, dass mit einer einzigen, d.h. baugleichen oder konstruktiv unveränderten Überwachungsvorrichtung 2 eine große Variantenvielfalt realisierbar ist, da die auskragende Länge (Abstand X1 bzw. Yn) der Überwachungsvorrichtung 2 über die beiden Schwenkmechanismen A, B einstellbar ist. Es ist somit eine problemlose Variantenbildung möglich, was bedeutet, dass mit einer Überwachungsvorrichtung oder einem Überwachungsvorrichtungsbautyp ohne Modifikationen eine große Anwendungspalette abgedeckt werden kann.

Die Variantenbildung kann hierbei auch spät in der Produktionskette stattfinden, was zu einer geringen Summe an Lieferkomponenten führt. Hierdurch können wiederum Entwicklungs-, Logistik-, und/oder Betriebsmittelkosten eingespart werden.

Anbautoleranzen in der Fahrzeug- und/oder der Armgeometrie der Überwachungsvorrichtung 2 können in einem weiten Bereich ausgeglichen werden.

Insbesondere bei Kunden, die keine Entwicklung für die Kameraarme und für ein eigenes Design bezahlen wollen, ist ein Standardkameraarm, der seine Ausladung (Auskragung) verstellen kann, wobei gleichzeitig die notwendigen/vorgeschriebenen Sichtfelder erreicht werden können, eine günstige Alternative.

Mit einer einzigen Ausgestaltung der Überwachungsvorrichtung 2 (beispielsweise hinsichtlich der Länge der Tragelemente 10 und/oder 12 und/oder 14, und/oder der Einbauposition der Sensoreinheit 4 im dritten Tragelement 14 und/oder den Verstellbereichen der Schwenkmechanismen A und B) kann die Überwachungsvorrichtung 2 an unterschiedliche Fahrzeug (z.B. Wohnmobile, Baustellenfahrzeuge, Agrarfahrzeuge, Sondermaschinen) kostengünstig bereitgestellt werden.

Sich in der Fertigungszeit ändernden Fahrzeugparametern (z.B. sich ändernder Aufbaudistanz C (Fig. 11)) kann ohne neu zu konstruierendem und zu fertigendem Tragsystem 6 Rechnung getragen werden.

Wie insbesondere aus den Figuren 6 bis 8 hervorgeht, ist mit der erfindungsgemäßen Überwachungsvorrichtung 2 auch im abgeklappten Zustand noch eine weitestgehend ungehinderte Sicht nach hinten/schräg außen möglich, da das dritte Tragelement 14 die Anklappbewegung des zweiten Tragelements 12 zu kompensieren vermag. Gemäß Fig. 8 ist es möglich, einer verbreiterten Ladung oder ähnlichen Situationen dadurch Rechnung zu tragen, dass das zweite Tragelement 12 um den ersten Schwenkmechanismus A eine entsprechende Schwenkbewegung durchführt, wobei das dritte Tragelement 14 entsprechende Kompensationsbewegungen ausführt. Hierdurch kann die Sensor- oder Bildaufnahmeeinheit 4 im größeren Abstand zur Karosserie 8 positioniert werden, ohne dass mit aufwendigen Teleskopiemechanismen gearbeitet werden muss.

Bei einer Notabklappung etwa gemäß Fig. 5, welche das Tragelement 12 quasi gewaltsam um den Schwenkmechanismus A in Richtung Karosserie 8 verschwenkt (wobei die Rast- oder Friktionslagerung im Schwenkmechanismus ausgelöst oder übersprungen wird), kann der z.B. elektromotrische Antrieb nach Passieren des Hindernisses 20 vom Fahrer betätigt werden, um das Tragelement 12 wieder in seine Ausgangslage zurückzubringen.

In obiger Beschreibung wurde im Zusammenhang mit den beiden Schwenkmechanismen A und B davon ausgegangen, dass diese eine definierte, im Raum stehende Schwenkachse haben.

Der Gegenstand der vorliegenden Erfindung betrifft eine Überwachungsvorrichtung mit den Merkmalen des Anspruchs 1.

Gegenstand der vorliegenden Erfindung ist weiterhin ein Verfahren zum Ansteuern einer derartigen Überwachungsvorrichtung, mit den Merkmalen des Anspruchs 21.

Gegenstand der vorliegenden Erfindung ist schließlich ein Fahrzeug, insbesondere ein Nutzfahrzeug, mit den Merkmalen des Anspruchs 22.

### Bezugszeichenliste:

- 2: Überwachungsvorrichtung
- 4: Sensoreinheit/Bildaufnahmeeinheit
- 6: Ausleger- oder Tragsystem
- 8: Karosserie(teil)
- 10: erstes Tragelement (lagefest an 8)
- 12: zweites Tragelement
- 14: drittes Tragelement
- 16: optische Achse
- 18: Erfassungsbereich (Rand)
- 20: Hindernis
- 22: Ladung (Sichthindernis)
- 24: Zugmaschine
- 26: Auflieger
- 28: Fahrzeugaufbau
- A: erster Schwenkmechanismus
- B: zweiter Schwenkmechanismus
- V: Fahrtrichtung Fahrzeug
- α, β: Winkel optische Achse zu Fahrzeuglängsachse
- y: Abschattung
- L1, L2: Abstände
- X1, Yn: Abstände
- Z, Zn: Anbaudistanz(en)
- C, Cn: Aufbaudistanz(en)
- LM: Längsmittelebene

## Patentansprüche

1. Überwachungsvorrichtung für das Umfeld eines Fahrzeugs, insbesondere für ein Spiegelersatzsystem, mit
einem ersten Tragelement (10), das lagefest mit dem Fahrzeug verbunden ist,
einem zweiten Tragelement (12),
einem ersten Schwenkmechanismus (A), der das erste und zweite Trageelement (10, 12) miteinander verbindet, und
einer Sensoreinheit (4), die einen räumlichen Erfassungsbereich (18) aufweist, wobei
das zweite Tragelement (12) bezüglich des ersten Tragelements (10) über den ersten Schwenkmechanismus (A) in wenigstens einer bestimmten Winkelposition feststellbar ist,
das zweite Tragelement (12) über einen zweiten Schwenkmechanismus (B) mit einem dritten Tragelement (14) verbunden ist, und
die Sensoreinheit (4) in dem dritten Tragelement (4) angeordnet ist, **gekennzeichnet durch** eine Steuerung, die veranlasst, dass
bei einem Schwenkvorgang zwischen erstem und zweitem Tragelement (10,12) das dritte Tragelement (14) um den zweiten Schwenkmechanismus (B) abgestimmt gesteuert oder mechanisch zwangsgekoppelt eine den Schwenkvorgang zwischen erstem und zweitem Tragelement (10, 12) bezüglich des Erfassungsbereichs (18) der Sensoreinheit (4) kompensierende Schwenkbewegung ausführt.

2. Überwachungsvorrichtung nach Anspruch 1, **dadurch gekennzeichnet, dass** die Sensoreinheit eine Bildaufnahmeeinheit (4) umfasst.

3. Überwachungsvorrichtung nach Anspruch 1 oder 2, **dadurch gekennzeichnet, dass** das dritte Tragelement (14) bezüglich des zweiten Tragelements (12) über den zweiten Schwenkmechanismus (B) in wenigstens einer bestimmten Winkelposition feststellbar ist.

4. Überwachungsvorrichtung nach einem der vorhergehenden Ansprüche, **dadurch gekennzeichnet, dass** die vorbestimmten Winkelpositionen zwischen dem ersten und zweiten Tragelement (10, 12) und zwischen dem zweiten und dritten Tragelement (12, 14) mindestens eine Betriebsposition umfassen.

5. Überwachungsvorrichtung nach einem der vorhergehenden Ansprüche, **dadurch gekennzeichnet, dass** das zweite und/oder dritte Tragelement (12, 14) als armförmiges Bauteil ausgebildet sind oder ist.

6. Überwachungsvorrichtung nach einem der vorhergehenden Ansprüche, **dadurch gekennzeichnet, dass** der räumliche Erfassungsbereich (18) der Sensoreinheit (4) entgegen der Fahrtrichtung des Fahrzeugs ausgerichtet ist.

7. Überwachungsvorrichtung nach einem der vorhergehenden Ansprüche 1 bis 4, **dadurch gekennzeichnet, dass** der räumliche Erfassungsbereich (18) der Sensoreinheit (4) im Wesentlichen nach unten auf die Fahrbahn ausgerichtet ist.

8. Überwachungsvorrichtung nach einem der vorhergehenden Ansprüche, **dadurch gekennzeichnet, dass** das zweite Tragelement (12) relativ zum ersten Tragelement (10) beim Einwirken einer größeren Kraft als der normalerweise im Betrieb auftretenden Kraft weg- oder einklappbar ist.

9. Überwachungsvorrichtung nach einem der vorhergehenden Ansprüche, **dadurch gekennzeichnet, dass** das dritte Tragelement (14) relativ zum zweiten Tragelement (12) beim Einwirken einer größeren Kraft als der normalerweise im Betrieb auftretenden Kraft weg- oder einklappbar ist.

10. Überwachungsvorrichtung nach einem der vorhergehenden Ansprüche, **dadurch gekennzeichnet, dass** die beiden Schwenkmechanismen (A, B) ein Rast- oder Friktionslager umfassen.

11. Überwachungsvorrichtung nach einem der vorhergehenden Ansprüche, **dadurch gekennzeichnet, dass** der erste und/oder zweite Schwenkmechanismus (A, B) eine definierte Schwenkachse aufweisen.

12. Überwachungsvorrichtung nach einem der vorhergehenden Ansprüche 1 bis 10, **dadurch gekennzeichnet, dass** der erste und/oder zweite Schwenkmechanismus (A, B) ein Kugelgelenk umfassen.

13. Überwachungsvorrichtung nach einem der vorhergehenden Ansprüche, **gekennzeichnet durch** eine mechanische oder elektromotorische Steuereinrichtung zur Betätigung des ersten und/oder zweiten Schwenkmechanismus (A, B).

14. Überwachungsvorrichtung nach Anspruch 13, **dadurch gekennzeichnet, dass** die Steuerung des zweiten Schwenkmechanismus (B) in Abhängigkeit von dem Winkel zwischen dem ersten (12) und dem zweiten Tragelement (14) erfolgt.

15. Überwachungsvorrichtung nach Anspruch 13 oder 14, **dadurch gekennzeichnet, dass** die Steuerung wenigstens eines der beiden Schwenkmechanismen (A, B) in Abhängigkeit von Fahrzuständen des Fahrzeugs erfolgt.

16. Überwachungsvorrichtung nach Anspruch 15, **dadurch gekennzeichnet, dass** die Steuerung wenigstens eines der beiden Schwenkmechanismen (A, B) in Abhängigkeit von wenigstens einem der folgenden Fahrzustände des Fahrzeugs erfolgt: Geschwindigkeit, Fahrtrichtung, Kurvenfahrt, Lenkwinkel, Anhängerwinkel zum Fahrzeug, Knickwinkel zwischen Zugmaschine und Auflieger, Aufliegerbreite und/oder -länge, seitlicher Überstand von Ladegut, Betätigung von Fahrtrichtungsanzeigen.

17. Überwachungsvorrichtung nach einem der vorhergehenden Ansprüche 13 bis 16, **dadurch gekennzeichnet, dass** die Steuerung wenigstens eines der beiden Schwenkmechanismen (A, B) in Abhängigkeit vom Aufbau (22) des Fahrzeugs erfolgt.

18. Überwachungsvorrichtung nach Anspruch 17, **dadurch gekennzeichnet, dass** die Steuerung wenigstens eines der beiden Schwenkmechanismen (A, B) derart erfolgt, dass ein Abstand (X1) zwischen der Sensoreinheit (4) und einer Längsmittelebene (LM) des Fahrzeugs unabhängig von einer sich ändernden Anbaudistanz (Zn) zwischen der Längsmittelebene (LM) und dem ersten Schwenkmechanismus (A) im Wesentlichen konstant ist.

19. Überwachungsvorrichtung nach Anspruch 17, **dadurch gekennzeichnet, dass** die Steuerung wenigstens eines der beiden Schwenkmechanismen (A, B) derart erfolgt, dass ein Abstand (Yn) zwischen der Sensoreinheit (4) und einer Längsmittelebene (LM) des Fahrzeugs bei im Wesentlichen unveränderter Anbaudistanz (Z) zwischen der Längsmittelebene (LM) und dem ersten Schwenkmechanismus (A) abhängig von einer Aufbaudistanz (Cn) zwischen der Längsmittelebene (LM) und einem Fahrzeugaufbau (28) veränderbar ist.

20. Überwachungsvorrichtung nach einem der vorhergehenden Ansprüche, **dadurch gekennzeichnet, dass** wenigstens einer der beiden Schwenkmechanismen (A, B) durch im Fahrzeuginnenraum angeordnete Steuerelemente steuerbar ist.

21. Verfahren zum Ansteuern einer Überwachungsvorrichtung für das Umfeld eines Fahrzeugs, insbesondere für ein Spiegelersatzsystem, nach einem oder mehreren der Ansprüche 1 bis 20, bei dem
das dritte Tragelement (14) bei einem Schwenkvorgang zwischen erstem (10) und zweitem Tragelement (12) im Verlauf seines Schwenkvorgangs um den zweiten Schwenkmechanismus (B) über definierte Logiken mechanischer und/oder elektronischer Art und/oder in Abhängigkeit von Eingangsgrößen oder bestimmten Parametern so angesteuert wird, dass der Schwenkvorgang zwischen erstem (10) und zweitem Tragelement (12) bezüglich des Erfassungsbereichs (18) der Sensoreinheit (4) kompensiert wird.

22. Fahrzeug, insbesondere Nutzfahrzeug, ausgestattet mit wenigstens einer Überwachungsvorrichtung nach einem oder mehreren der Ansprüche 1 bis 20.

## Claims

1. A monitoring device for the surroundings of a vehicle, in particular for a mirror replacement system, comprising
a first support element (10) which is connected to the vehicle so as to be fixed in position,
a second support element (12),
a first swivel mechanism (A) connecting the first and second support element (10, 12) to each other, and
a sensor unit (4) comprising a three-dimensional detection area (18),
the second support element (12) being able to be locked in at least one defined angular position relative to the first support element (10) by means of the first swivel mechanism (A),
the second support element (12) is connected to a third support element (14) via a second swivel mechanism (B), and
the sensor unit (4) is arranged in the third support element (4),
**characterized by** a control which initiates that
during a swiveling procedure between the first and second support elements (10, 12), the third support element (14) carries out a swiveling movement in a coordinatingly controlled or mechanically force-coupled manner about the second swiveling mechanism (B) which compensates for the swiveling procedure between the first and second support elements (10, 12) with respect to the detection area (18) of the sensor unit (4).

2. The monitoring device according to claim 1, **characterized in that** the sensor unit comprises an image acquisition unit (4).

3. The monitoring device according to claim 1 or 2, **characterized in that** the third support element (14) can be locked in at least one defined angular position relative to the second support element (12) by means of the second swivel mechanism (B).

4. The monitoring device according to one of the preceding claims, **characterized in that** the predetermined angular positions between the first and second support element (10, 12) and between the second and third support element (12, 14) comprise at least one operational position.

5. The monitoring device according to one of the preceding claims, **characterized in that** the second and/or third support element (12, 14) is/are formed as an arm-shaped component.

6. The monitoring device according to one of the preceding claims, **characterized in that** the three-dimensional detection area (18) of the sensor unit (4) is oriented contrary to the driving direction of the vehicle.

7. The monitoring device according to one of the preceding claims 1 to 4, **characterized in that** the three-dimensional detection area (18) of the sensor unit (4) is oriented substantially downward toward the roadway.

8. The monitoring device according to one of the preceding claims, **characterized in that** the second support element (12) can be folded down relative to the first support element (10) under the influence of a force which is larger than that normally occurring during operation.

9. The monitoring device according to one of the preceding claims, **characterized in that** the third support element (14) can be folded down relative to the second support element (12) under the influence of a force which is larger than that normally occurring during operation.

10. The monitoring device according to one of the preceding claims, **characterized in that** the two swivel mechanisms (A, B) comprise a snap-in bearing or friction bearing.

11. The monitoring device according to one of the preceding claims, **characterized in that** the first and/or second swivel mechanism (A, B) have a defined swivel axis.

12. The monitoring device according to one of the preceding claims 1 to 10, **characterized in that** the first and/or second swivel mechanism (A, B) comprise a ball joint.

13. The monitoring device according to one of the preceding claims, **characterized by** a mechanical or electromotive control system for actuating the first and/or second swivel mechanism (A, B).

14. The monitoring device according to claim 13, **characterized in that** the process of controlling the second swivel mechanism (B) is carried out as a function of the angle between the first support element (12) and the second support element (14).

15. The monitoring device according to claim 13 or 14, **characterized in that** the process of controlling at least one of the two swivel mechanisms (A, B) is carried out as a function of driving statuses of the vehicle.

16. The monitoring device according to claim 15, **characterized in that** the process of controlling at least one of the two swivel mechanisms (A, B) is carried out as a function of at least one of the following driving statuses of the vehicle: speed, driving direction, cornering, steering angle, trailer angle relative to the vehicle, buckling angle between tractor unit and trailer, trailer width and/or length, lateral protrusion of loaded goods, actuation of driving direction indicators.

17. The monitoring device according to one of the preceding claims 13 to 16, **characterized in that** the process of controlling at least one of the two swivel mechanisms (A, B) is carried out as a function of the structure (22) of the vehicle.

18. The monitoring device according to claim 17, **characterized in that** the process of controlling at least one of the two swivel mechanisms (A, B) is carried out in such a manner that a distance (X1) between the sensor unit (4) and a longitudinal median plane (LM) of the vehicle is substantially constant regardless of a changing fixture distance (Zn) between the longitudinal median plane (LM) and the first swivel mechanism (A). (Fig. 10)

19. The monitoring device according to claim 17, **characterized in that** the process of controlling at least one of the two swivel mechanisms (A, B) is carried out in such a manner that a distance (Yn) between the sensor unit (4) and a longitudinal median plane (LM) of the vehicle - with the fixture distance (Z) between the longitudinal median plane (LM) and the first swivel mechanism (A) being substantially unchanged - can be altered as a function of a setup distance (Cn) between the longitudinal median plane (LM) and a vehicle body (28).

20. The monitoring device according to one of the preceding claims, **characterized in that** at least one of the two swivel mechanisms (A, B) can be controlled by control elements arranged in the vehicle interior.

21. A method of controlling a monitoring device for the surroundings of a vehicle, in particular for a mirror replacement system, according to one or more of claims 1 to 20, in which
during a swiveling procedure between the first support element (10) and the second support element (12), the third support element (14) is controlled in the course of its swiveling around the second swivel mechanism (B) via defined logics of the mechanical and/or electronic type and/or in dependence on input variables or specific parameters such that the swiveling procedure between the first support element (10) and the second support element (12) is compensated with respect to the detection area (18) of the sensor unit (4).

22. A vehicle, in particular a commercial vehicle, equipped with at least one monitoring device according to one or more of claims 1 to 20.

## Revendications

1. Dispositif de surveillance de l'environnement d'un véhicule, en particulier pour un système de substitution de rétroviseur, avec
un premier élément de support (10), qui est relié en position fixe au véhicule,
un deuxième élément de support (12),
un premier mécanisme de pivotement (A), qui relie le premier et deuxième élément de support (10, 12) l'un à l'autre, et
une unité capteur (4), qui présente une zone de détection spatiale (18),
dans lequel
le deuxième élément de support (12) peut être fixé dans au moins une position angulaire déterminée par rapport au premier élément de support (10) par l'intermédiaire du premier mécanisme de pivotement (A),
le deuxième élément de support (12) est relié à un troisième élément de support (14) par l'intermédiaire d'un deuxième mécanisme de pivotement (B), et
l'unité capteur (4) est disposée dans le troisième élément de support (4), **caractérisé par** une commande qui fait en sorte que
lors d'un processus de pivotement entre le premier et deuxième élément de support (10, 12), le troisième élément de support (14), de manière commandée et adaptée ou de manière accouplée de force mécaniquement, effectue autour du deuxième mécanisme de pivotement (B) un mouvement de pivotement compensant le processus de pivotement entre le premier et deuxième élément de support (10, 12) par rapport à la zone de détection (18) de l'unité capteur (4).

2. Dispositif de surveillance selon la revendication 1, **caractérisé en ce que** l'unité capteur comprend une unité d'acquisition d'image (4).

3. Dispositif de surveillance selon la revendication 1 ou 2, **caractérisé en ce que** le troisième élément de support (14) peut être fixé dans au moins une position angulaire déterminée par rapport au deuxième élément de support (12) par l'intermédiaire du deuxième mécanisme de pivotement (B).

4. Dispositif de surveillance selon l'une quelconque des revendications précédentes, **caractérisé en ce que** les positions angulaires prédéfinies entre le premier et deuxième élément de support (10, 12) et entre le deuxième et troisième élément de support (12, 14) comprennent au moins une position de fonctionnement.

5. Dispositif de surveillance selon l'une quelconque des revendications précédentes, **caractérisé en ce que** le deuxième et/ou troisième élément de support (12, 14) sont ou est réalisé(s) sous la forme d'une pièce en forme de bras.

6. Dispositif de surveillance selon l'une quelconque des revendications précédentes, **caractérisé en ce que** la zone de détection spatiale (18) de l'unité capteur (4) est orientée à l'encontre du sens de marche du véhicule.

7. Dispositif de surveillance selon l'une quelconque des revendications précédentes 1 à 4, **caractérisé en ce que** la zone de détection spatiale (18) de l'unité capteur (4) est orientée sensiblement vers le bas vers la chaussée.

8. Dispositif de surveillance selon l'une quelconque des revendications précédentes, **caractérisé en ce que** le deuxième élément de support (12) peut être replié ou rabattu par rapport au premier élément de support (10) lors de l'exercice d'une force plus importante que la force se manifestant normalement pendant le fonctionnement.

9. Dispositif de surveillance selon l'une quelconque des revendications précédentes, **caractérisé en ce que** le troisième élément de support (14) peut être replié ou rabattu par rapport au deuxième élément de support (12) lors de l'exercice d'une force plus importante que la force apparaissant normalement pendant le fonctionnement.

10. Dispositif de surveillance selon l'une quelconque des revendications précédentes, **caractérisé en ce que** les deux mécanismes de pivotement (A, B) comprennent un palier d'encliquetage ou à friction.

11. Dispositif de surveillance selon l'une quelconque des revendications précédentes, **caractérisé en ce que** les premier et/ou deuxième mécanismes de pivotement (A, B) présentent un axe de pivotement défini.

12. Dispositif de surveillance selon l'une quelconque des revendications précédentes 1 à 10, **caractérisé en ce que** les premier et/ou deuxième mécanismes de pivotement (A, B) comprennent une articulation sphérique.

13. Dispositif de surveillance selon l'une quelconque des revendications précédentes, **caractérisé par** un dispositif de commande mécanique ou électromoteur permettant d'actionner le premier et/ou deuxième mécanisme de pivotement (A, B).

14. Dispositif de surveillance selon la revendication 13, **caractérisé en ce que** la commande du deuxième mécanisme de pivotement (B) s'effectue en fonction de l'angle entre le premier (12) et le deuxième élément de support (14).

15. Dispositif de surveillance selon la revendication 13 ou 14, **caractérisé en ce que** la commande d'au moins un des deux mécanismes de pivotement (A, B) s'effectue en fonction des états de marche du véhicule.

16. Dispositif de surveillance selon la revendication 15, **caractérisé en ce que** la commande d'au moins un des deux mécanismes de pivotement (A, B) s'effectue en fonction d'au moins un des états de marche suivants du véhicule : vitesse, sens de marche, négociation d'un virage, angle de direction, angle de remorque par rapport au véhicule angle d'articulation entre le véhicule tracteur et la semi-remorque, largeur et/ou longueur de semi-remorque, dépassement latéral du chargement, actionnement de clignotants.

17. Dispositif de surveillance selon l'une quelconque des revendications précédentes 13 à 16, **caractérisé en ce que** la commande d'au moins un des deux mécanismes de pivotement (A, B) s'effectue en fonction de la carrosserie (22) du véhicule.

18. Dispositif de surveillance selon la revendication 17, **caractérisé en ce que** la commande d'au moins un des deux mécanismes de pivotement (A, B) s'effectue de telle sorte qu'un écart (X1) entre l'unité capteur (4) et un plan médian longitudinal (LM) du véhicule est sensiblement constant indépendamment d'une distance de montage (Zn) variable entre le plan médian longitudinal (LM) et le premier mécanisme de pivotement (A).

19. Dispositif de surveillance selon la revendication 17, **caractérisé en ce que** la commande d'au moins un des deux mécanismes de pivotement (A, B) s'effectue de telle sorte qu'un écart (Yn) entre l'unité capteur (4) et un plan médian longitudinal (LM) du véhicule, pour une distance de montage (Z) sensiblement inchangée entre le plan médian longitudinal (LM) et le premier mécanisme de pivotement (A), peut être modifié en fonction d'une distance de montage (Cn) entre le plan médian longitudinal (LM) et une carrosserie de véhicule (28).

20. Dispositif de surveillance selon l'une quelconque des revendications précédentes, **caractérisé en ce qu'**au moins un des deux mécanismes de pivotement (A, B) peut être commandé par des éléments de commande disposés dans l'habitacle du véhicule.

21. Procédé permettant de commander un dispositif de surveillance pour l'environnement d'un véhicule, en particulier pour un système de substitution de rétroviseur, selon l'une ou plusieurs des revendications 1 à 20, selon lequel
le troisième élément de support (14), lors d'un processus de pivotement entre le premier (10) et deuxième élément de support (12), est commandé au cours de son processus de pivotement autour du deuxième mécanisme de pivotement (B) par l'intermédiaire de logiques définies de type mécanique et/ou électronique et/ou en fonction de grandeurs d'entrée ou paramètres déterminés, de sorte que le processus de pivotement entre le premier (10) et deuxième élément de support (12) par rapport à la zone de détection (18) de l'unité capteur (4) est compensé.

22. Véhicule, en particulier véhicule utilitaire, équipé d'au moins un dispositif de surveillance selon l'une ou plusieurs des revendications 1 à 20.
